# EUROPÄISCHE PATENTSCHRIFT

(11) **EP 2 174 895 B1**
(45) Veröffentlichungstag und Bekanntmachung des Hinweises auf die Patenterteilung: **18.04.2012**
(21) Anmeldenummer: 09158416.9
(22) Anmeldetag: 22.04.2009
(51) Int. Cl.: B65G 47/08

(54) **Vorrichtung und Verfahren zum ökonomischen Formen von Gebindelagen**
Device and method for economically forming layers of containers
Dispositif et procédé économique de formation de couches de conteneurs

(30) Priorität: 02.10.2008 DE 102008050395
(43) Veröffentlichungstag der Anmeldung: 14.04.2010
(73) Patentinhaber: Krones AG, 93068 Neutraubling (DE)
(72) Erfinder: Huber, Wolfgang, 85567, Grafing (DE)
(74) Vertreter: Reichert, Werner Franz

(56) Entgegenhaltungen:
- EP-A2- 1 767 474
- US-A- 3 587 876
- US-A1- 2005 246 056

## Beschreibung

Die vorliegende Erfindung betrifft eine Vorrichtung zum ökonomischen Formen von Gebindelagen. Die Vorrichtung umfasst mindestens einen Zuleitförderer zum Zuführen der Gebinde. Ferner ist mindestens ein weiterer Förderer vorgesehen der dem Zuleitförderer nachgeschaltet ist. Dem weiteren Förderer ist mindestens ein Greifer zum Positionieren und/oder Drehen der Gebinde zugeordnet. Mindestens ein Auslaufförderer ist dem weiteren Förderer nachgeschaltet, auf dem die positionierten und/oder gedrehten Gebinde mit Mitteln zu formschlüssigen Gebindelagen zusammenführbar sind.

Ferner betrifft die Erfindung ein Verfahren zum ökonomischen Formen von Gebindelagen.

Die US Patentschrift 3,587,876 offenbart eine gattungsgemäße Vorrichtung zum Beladen von Paletten. Mit dieser Vorrichtung können einzelne Gebinde der Vorrichtung zugeführt und um 90° gedreht werden. Die Gebinde werden zu diesem Zweck in festen Bahnen den greiferähnlichen Drehelementen zugeordnet, die dann die Gebinde drehen. Mit den Drehelementen ist es nur möglich ein Gebinde zu drehen. Die gedrehten Gebinde werden im weiteren Verlauf durch seitlich angebrachte Elemente zu einer Lage zusammengestellt und anschließend Lage für Lage auf einer Palette gestapelt.

In der deutschen Offenlegungsschrift DE 102 19 129 A1 ist ein Verfahren beschrieben, mit dem Packs gedreht und wahlweise verteilt oder zusammengefasst werden können. Um die Packs zu händeln, werden sie mit einem Greifer aufgenommen und um 90° gedreht. Mit diesem Greifer ist es möglich, mehrere Packs, die in einer Reihe hintereinander angeliefert werden, in einem Arbeitsschritt zu drehen, so dass die Packs nebeneinander liegen. Weiterhin ist es möglich mit dem Greifer mehrere nebeneinander liegende Packs gleichzeitig zu drehen, so dass sie nach dem Drehen hintereinander angeordnet sind.

In der europäischen Patentanmeldung EP 1 046 598 A1 ist eine Vorrichtung zum Herstellen palettierfähiger Lagen von Gebinde-Packungen offenbart. Bei der erfindungsgemäßen Vorrichtung werden die zugeführten Gebinde auf einem Förderband durch mehrere Greifer um 90° gedreht und/oder versetzt. Diese Greifer sind an Lineareinheiten befestigt, die diagonal über dem Förderband und parallel zueinander angeordnet sind. Jeder Greifer ist durch seine Installation an einer der Lineareinheiten an einen festen Arbeitsbereich gebunden. Nach dem Drehen und/oder Positionieren der Gebinde werden diese zu Gebindelagen zusammengefasst.

In der europäischen Patentschrift EP 0 761 578 B1 ist ein Verfahren und eine Vorrichtung zum zusammenstellen von Gebindelagen und deren Palettierung offenbart. In bevorzugter Weise werden die Verkaufseinheiten mit zwei Bändern angeliefert. Die Verkaufseinheiten werden dann von Robotern aufgenommen und auf einem dritten Förderband zu Lagen zusammengestellt. In einem weiteren Arbeitsschritt werden die Lagen aufgenommen und Lage für Lage auf einer Palette abgesetzt.

Die US Patentanmeldung 2005/0246056 A1 offenbart eine Vorrichtung zur Positionierung von Gebinden und deren Palettierung. Die Gebinde werden mit einem Förderer angeliefert. Mit einem zweiten Förderer werden die Gebinde für die nachfolgenden Arbeitsschritte vereinzelt. Mit einem Greifer werden die Gebinde gedreht und nach einem vorgegebenen Schema für die Palettierung auf dem Förderer positioniert. Im weiteren Verlauf werden die Gebinde von einem Anschlag gestoppt, bis diejenige Menge an Gebinden vorhanden ist, die für eine Gebindelage benötigt wird. Anschließend werden die Gebindelagen mit einer über dem Förderer angeordneten Schubeinheit über eine feste Ebene auf die Palette überführt. Weitere Gebindelagen können durch absenken der Palette aufgebracht werden. In einer weiteren Ausführungsform werden die Gebinde auf zwei parallel laufenden Fördern angeliefert. Anschließend werden die Gebinde zu Gruppen zusammengestellt, die dann vollständig von dem Greifer gedreht und positioniert werden. So ist es möglich in einem Arbeitsgang mehrere Gebinde gleichzeitig zu handhaben und für die Bildung einer Gebindelage bereit zu stellen.

Die europäische Patentschrift EP 1 456 101 B1 offenbart ein Verfahren und eine Vorrichtung zur Reihenbildung von Packgütern. Die Packgüter werden in Reihe (Stoß an Stoß) der Vorrichtung zugeführt. Mittels zweier Trennförderabschnitte werden die Packgüter vereinzelt. Im weiteren Verlauf werden die Packgüter mittels der Drehförderabschnitte gedreht. Nach dem Drehen werden die Packgüter über zwei Reihenförderabschnitte weitertransportiert bis sie in den Bereitstellungsförderer einlaufen. Hier werden die Packgüter zusammengeschoben und mit einem Schieber quer zur vorherigen Förderrichtung in die Station zur Lagenbildung geschoben. Von der Station zur Lagenbildung werden die Lagen aus Packgütern mit dem Lagenförderer der Palletierstation zugeführt.

Der Erfindung liegt die Aufgabe zugrunde, eine Vorrichtung zum ökonomischen Formen von Gebindelagen zu schaffen.

Diese Aufgabe wird gelöst durch eine Vorrichtung mit den Merkmalen des Anspruchs 1.

Eine weitere Aufgabe der Erfindung ist es ein Verfahren zu schaffen, mit dem das ökonomische Formen von Gebindelagen möglich ist.

Die obige Aufgabe wird durch ein Verfahren gelöst, das die Merkmale des Anspruchs 10 umfasst.

Die erfindungsgemäße Vorrichtung zum ökonomischen Formen von Gebindelagen besteht aus mindestens einem Zuleitförderer, mit dem die Gebinde der Vorrichtung zum ökonomischen Formen von Gebindelagen zugeführt werden. Von dem Zuleitförderer werden die Gebinde mindestens einem weiteren Förderer zugeführt. Dem mindestens einen weiteren Förderer ist mindestens ein Greifer zum Positionieren und/oder Drehen der Gebinde zugeordnet.

Der mindestens eine Greifer ist derart ausgestaltet, dass mit ihm mindestens ein Gebinde positionierbar und/oder drehbar ist. Auf dem positionierten und/oder gedrehten Gebinde wird mit dem Greifer mindestens ein weiteres Gebinde, in gleicher Orientierung, abgesetzt. Das heißt, dass das zweite Gebinde auf dem ersten positionierten und/oder gedrehten Gebinde in gleicher Orientierung auf dem ersten Gebinde abgesetzt wird. Dadurch bilden das erste und das zweite Gebinde nach dem Absetzen des zweiten Gebindes einen Stapel gleicher Orientierung. Eine weitere Ausgestaltungsform besteht darin, dass der Greifer derart ausgebildet ist, dass er mindestens zwei Gebinde positionieren und/oder drehen kann. Hierzu werden mit dem Greifer zwei Gebinde übereinander gestapelt. Der so entstandene Stapel aus Gebinden wird mit dem Greifer in einem Arbeitsgang positioniert und/oder gedreht.

Die positionierten und/oder gedrehten Gebinde werden mit mindestens einem Auslaufförderer, der dem weiteren Förderer nachgeschaltet ist, weitertransportiert. Auf dem Auslaufförderer werden die positionierten und/oder gedrehten Gebinde mit verschiedenen Mitteln zu formschlüssigen Gebindelagen zusammenführt. Der Auslaufförderer umfasst zwei Teile, die jeweils aus mindestens einem Stetigförderer bestehen, die unterschiedlich ausgestaltet sein können. Stetigförderer sind in sehr vielen Varianten aus dem Stand der Technik bekannt, so dass hier nicht näher darauf eingegangen werden muss.

Die Zusammenführung der Stapel aus Gebinden zu formschlüssigen Gebindelagen in Transportrichtung erfolgt durch einen Anschlag. Dieser Anschlag ist zwischen dem ersten Teil des Auslaufförderers und dem zweiten Teil des Auslaufförderers angeordnet. Durch den Anschlag werden die Stapel aus Gebinden ausschließlich in Transportrichtung aufgestaut. Durch dieses Aufstauen der Stapel in Transportrichtung entstehen die mindestens zwei formschlüssigen Gebindelagen, bei denen der Formschluss lediglich in Transportrichtung besteht. Um einen Weitertransport der Gebindelagen zu ermöglichen wird der Anschlag versenkt, so dass die Gebindelagen zum zweiten Teil des Auslaufförderers transportiert werden können.

Um palettierfähige Gebindelagen zu erhalten ist es notwendig diese auch quer zur Transportrichtung formschlüssig zusammenzuführen. Zu diesem Zweck kann ein Schieberpaar verwendet werden, welches parallel zur Transportrichtung dem zweiten Teil des Auslaufförderers zugeordnet ist. Durch das Zusammenfahren des Schieberpaares werden die Gebindelagen nun ebenfalls quer zur Transportrichtung formschlüssig zusammengeschoben, so dass zwei palettierfähige Gebindelagen entstehen, wobei die Gebinde innerhalb einer Gebindelage vollständig formschlüssig sind.

In einer speziellen Ausführungsform ist der mindestens eine Greifer derart ausgestaltet, dass er ein Gebinde, welches später Bestandteil einer ersten Gebindelage ist, positionieren und/oder drehen kann. Im weiteren Verlauf setzt dieser Greifer dann auf dem ersten positionierten und/oder gedrehten Gebinde ein weiteres Gebinde ab. Wichtig ist hierbei, dass das zweite Gebinde, welches auf dem ersten Gebinde abgesetzt wird die gleiche Orientierung aufweist wie das erste Gebinde, so dass ein Stapel aus zwei gleich orientierten Gebinden gebildet wird.

Eine weitere Ausführungsform des mindestens einen Greifers besteht darin, dass der Greifer derart ausgestaltet ist, dass er mindestens zwei Gebinde gleichzeitig fassen kann und somit einen Stapel positionieren und/oder drehen kann. Der Greifer setzt dabei ein zweites Gebinde, welches später Bestandteil der zweiten Gebindelage ist, auf einem ersten Gebinde, welches Bestandteil der ersten Gebindelage ist, in gleicher Orientierung auf den ersten Gebinde ab. Anschließend wird der so gebildete Stapel aus zwei Gebinden mit dem mindestens einen Greifer aufgenommen und mit ihm positioniert und/oder gedreht.

Um die mindesten zwei gestapelten und formschlüssigen Gebindelagen einem Palettierer zuführen zu können, ist es notwendig mindestens ein Mittel bereitzustellen, mit dem dies realisiert werden kann. Dieses Mittel kann in einer Ausführungsform dem zweiten Teil des Auslaufförderers zugeordnet sein, so dass es die Gebindelagen dem Palettierer, der dem zweiten Teil des Auslaufförderers nachgeschaltet ist, zuführen kann.

Der Palettierer umfasst in einer bevorzugten Ausführungsform mindestens einen Jalousiekopf. Mit diesem mindestens einen Jalousiekopf werden, die auf dem Auslaufförderer gebildeten, formschlüssigen Gebindelagen, aufgenommen und auf Paletten abgesetzt.

Als Mittel um die Gebindelagen dem Jalousiekopf zuzuführen ist aus dem Stand der Technik ein Schieber bekannt. Mit diesem Schieber werden die palettrierfertigen, formschlüssigen Gebindelagen, die auf dem Auslaufförderer zusammengestellt wurden, vollständig in den Jalousiekopf geschoben.

Eine zweite Ausführungsform für das mindestens eine Mittel zum Zuführen ist ein Bügel, der an dem Jalousiekopf angeordnet ist. Mit diesem Bügel werden die Gebindelagen, welche zuvor mit dem zweiten Teil des Auslaufförderers in den Jalousiekopf gefahren wurden vollständig in diesen eingeschoben und gesichert. Dies ist notwendig, da es mit dem zweiten Teil des Auslaufförderers nicht möglich ist, die Gebindelagen vollständig in den Jalousiekopf einzuschieben. Die vorderen Stapel der Gebindelagen werden durch die von hinten nachrückenden Stapel in den Jalousiekopf geschoben. Die letzten Stapel haben keine nachfolgenden Stapel mehr die von dem zweiten Teil des Auslaufförderers angetrieben werden. Diese letzten Stapel werden dann mit dem Bügel in den Jalousiekopf geschoben. Hier wird auf den Schieber verzichtet, der die Gebindelagen vollständig in den Jalousiekopf schieben würde.

Im Folgenden sollen Ausführungsbeispiele die erfindungsgemäße Vorrichtung zum ökonomischen Formen von Gebindelagen und deren Vorteile anhand der beigefügten
Figuren näher erläutern.
Figur 1 zeigt schematisch den Aufbau der Vorrichtung zum ökonomischen Formen von Gebindelagen, in der Draufsicht.
Figur 2 zeigt schematisch den Aufbau eines Ausschnittes der Vorrichtung zum ökonomischen Formen von Gebindelagen in der Seitenansicht.
Figur 3 zeigt schematisch in der Draufsicht, wie auf dem Auslaufförderer aus den Stapeln die Gebindelagen erzeugt werden.
Figur 4 zeigt schematisch in der Seitenansicht, wie auf dem Auslaufförderer aus den Stapeln die Gebindelagen erzeugt werden.
Figur 5 zeigt schematisch, wie die Gebindelagen mit dem Schieber in den Jalousiekopf überführt werden.
Figur 6 zeigt schematisch, wie die Gebindelagen mit dem Bügel in den Jalousiekopf überführt werden.
Figur 7 zeigt schematisch, wie die Gebindelagen mit dem Bügel und zusätzlichen Aufwälzrollen in den Jalousiekopf überführt werden.
Figur 8 zeigt schematisch den Aufbau eines Greifers zur Aufnahme von einem Gebinde.
Figur 9 zeigt schematisch den Aufbau eines Greifers zur Aufnahme von zwei Gebinden.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind.

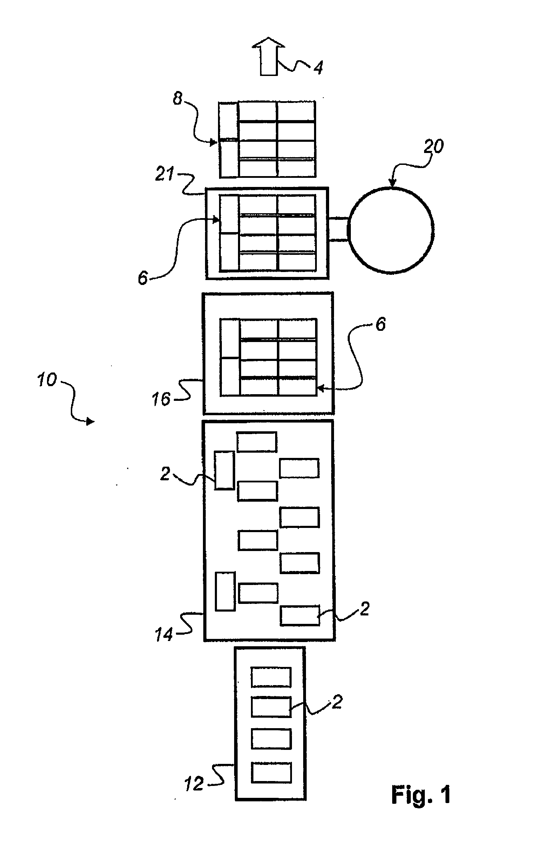

Figur 1 zeigt schematisch den Aufbau der Vorrichtung 10 zum ökonomischen Formen von Gebindelagen 6, in der Draufsicht. Mit einem Zuleitförderer 12 werden die Gebinde 2 in Reihe der Vorrichtung 10 zum Formen von Gebindelagen 6 zugeführt. Dem Zuleitförderer 12 ist ein weiterer Förderer 14 nachgeschaltet, auf dem die Gebinde 2 positioniert und/oder gedreht werden. Die positionierten und/oder gedrehten Gebinde 2 werden von dem weiteren Förderer 14 an einen Auslaufförderer 16 übergeben, wo sie zu Gebindelagen 6 zusammengefügt werden. Von dem Auslaufförderer 16 werden die Gebindelagen 6 in Transportrichtung 4 an einen Palettierer 20 übergeben, der mit mindestens einem Jalousiekopf 21 zum Palettieren der Gebindelagen 6 ausgestattet ist.

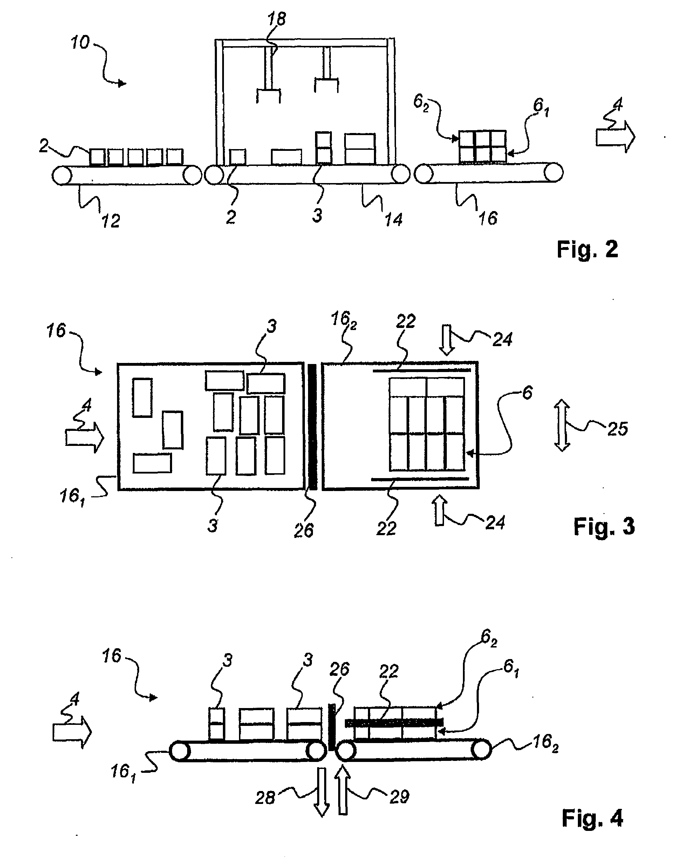

Figur 2 zeigt schematisch den Aufbau eines Ausschnittes der Vorrichtung 10 zum ökonomischen Formen von Gebindelagen 6 in der Seitenansicht. Die Gebinde 2 werden in Reihe mit dem Zuleitförderer 12 an den weiteren Förderer 14 übergeben. Auf dem weiteren Förderer 14 werden die Gebinde 2 von mindestens einem Greifer 18 positioniert und/oder gedreht. Weiterhin werden die positionierten und/oder gedrehten Gebinde 2 mit mindestens einem Greifer 18 gestapelt, so dass sich Stapel 3 aus zwei Gebinden 2 bilden. Im weiteren Verlauf werden die Stapel 3 in Transportrichtung 4 weitertransportiert und an den Auslaufförderer 16 übergeben. Auf dem Auslaufförderer 16 werden aus den Stapeln 3 formschlüssige Gebindelagen 6₁ und 6₂ erzeugt.

Figur 3 zeigt schematisch in der Draufsicht, wie auf dem Auslaufförderer 16 aus den Stapeln 3 die Gebindelagen 6 erzeugt werden. Im ersten Teil des Auslaufförderers 16₁ werden die Stapel 3 in Transportrichtung 4 gegen einen Anschlag 26 gefördert. Mit dem Anschlag 26 werden die Stapel 3 derart aufgestaut, dass sie zu in Transportrichtung 4 formschlüssigen Gebindelagen 6 zusammengefahren werden. Auf dem zweiten Teil des Auslaufförderers 16₂ werden die in Transportrichtung 4 formschlüssig zusammengeführten Gebindelagen 6 in der Querrichtung 25 zur Transportrichtung 4 durch ein Schieberpaar 22 formschlüssig zusammengeführt. Zu diesem Zweck wird das Schieberpaar 22 in Schubrichtung 24 bewegt so dass sich ein Formschluss innerhalb der Gebindelagen 6 sowohl in Transportrichtung 4 als auch quer zur Transportrichtung 4 ausbildet.

Figur 4 zeigt schematisch in der Seitenansicht, wie auf dem Auslaufförderer 16 aus den Stapeln 3 die Gebindelagen 6 erzeugt werden. Auf dem ersten Teil des Auslaufförderers 16, werden die Stapel 3 durch den Anschlag 26 derart aufgestaut, dass sie zu in Transportrichtung 4 formschlüssigen Gebindelagen 6₁ und 6₂ zusammengeführt werden. Damit die Gebindelagen 6₁ und 6₂ an den zweiten Teil des Auslaufförderers 16₂ übergeben werden können, wird der Anschlag 26 in Pfeilrichtung 28 zwischen den beiden Teilen des Auslaufförderers 16 versenkt. Nachdem die Gebindelagen 6₁ und 6₂ an den zweiten Teil des Auslaufförderers 16₂ übergeben wurden, wird der Anschlag 26 in Pfeilrichtung 29 zurückgefahren, so dass weitere Gebindelagen 6₁ und 6₂, die mit dem ersten Teil des Auslaufförderers 16₁ zugeführt werden, aufgestaut werden können. Auf dem zweiten Teil des Auslaufförderers 16₂ werden die in Transportrichtung 4 formschlüssigen Gebindelagen 6₁ und 6₂ mit dem Schieberpaar 22 formschlüssig in Transportrichtung 4 und quer zur Transportrichtung 4 zusammengeführt.

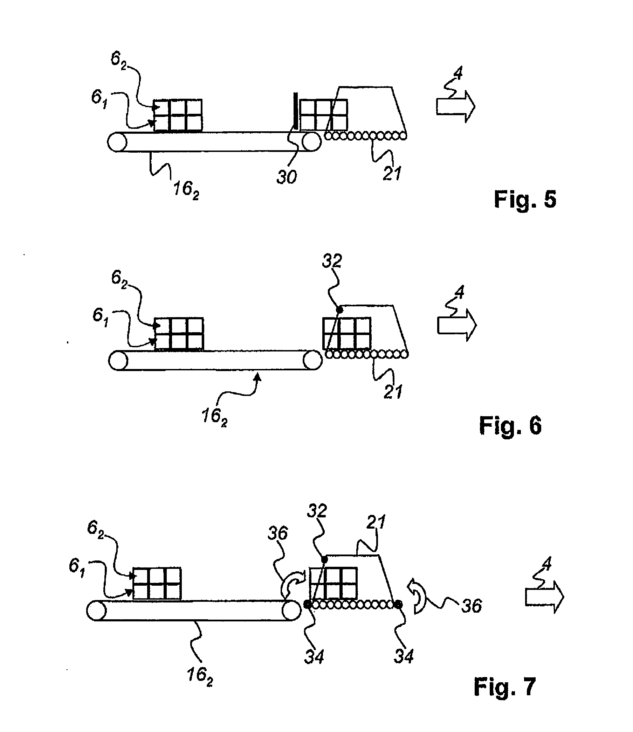

Figur 5 zeigt schematisch, wie die Gebindelagen 6₁ und 6₂ mit dem Schieber 30 in den Jalousiekopf 21 überführt werden. Die Überführung erfolgt derart, dass der Schieber 30 die Gebindelagen 6₁ und 6₂ in Transportrichtung 4 in den Jalousiekopf 21 hineinschiebt. Nachdem die Gebindelagen 6₁ und 6₂ in den Jalousiekopf 21 geschoben wurden, wird der Schieber 30 über den zweiten Teil des Auslaufförderers 16₂ zurückgefahren, so dass mit dem zweiten Teil des Auslaufförderers 16₂ nachfolgende Gebindelagen 6₁ und 6₂ in den Jalousiekopf 21 geschoben werden können.

Figur 6 zeigt schematisch, wie die Gebindelagen 6₁ und 6₂ mit dem Bügel 32 in den Jalousiekopf 21 überführt werden. In dieser Ausführungsform werden die Gebindelagen 6₁ und 6₂ wie schon in Figur 5 beschrieben mit dem zweiten Teil des Auslaufförderers 16₂ in den Jalousiekopf 21 geschoben. Der letzte Stapel 3 der Gebindelagen 6₁ und 6₂ kann jedoch nicht vollständig mit dem zweiten Teil des Auslaufförderers 16₂ in den Jalousiekopf 21 eingeschoben werden, da der zweite Teil des Austaufförderers 16₂ nicht bis in den Jalousiekopf 21 hineinreicht. Zum vollständigen Einschieben der Gebindelagen 6₁ und 6₂ wird der Bügel 32 herunter gefahren und schiebt dabei die Gebindelagen 6₁ und 6₂ vollständig in den Jalousiekopf 21. Ferner dient der Bügel 32 zur Sicherung der Gebindelagen 6₁ und 6₂ im Jalousiekopf 21.

Figur 7 zeigt schematisch, wie die Gebindelagen 6₁ und 6₂ mit dem Bügel 32 und zusätzlichen Aufwälzrollen 34 in den Jalousiekopf 21 überführt werden. In dieser Ausführungsform werden die Gebindelagen 6₁ und 6₂ durch die angetriebene Aufwälzrolle 34 in den Jalousiekopf 21 eingeschoben. Der Bügel 32 bewegt die Gebindelagen 6₁ und 6₂ wie in Figur 6 beschrieben in den Jalousiekopf 21 hinein.

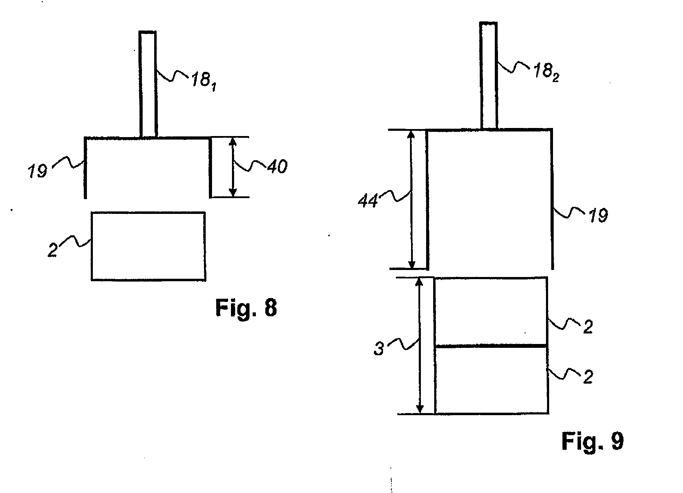

Figur 8 zeigt schematisch den Aufbau eines Greifers 18₁ zur Aufnahme von einem Gebinde 2. Mit diesem Greifer 18₁ ist es möglich ein Gebinde 2 aufzunehmen. Dies wird im Wesentlichen durch die Länge 40 der Greifwerkzeuge 19 möglich.

Figur 9 zeigt schematisch den Aufbau eines Greifers 18₂ zur Aufnahme von einem Stapel 3 aus zwei Gebinden 2. Hierbei ist die Länge 44 der Greifwerkzeuge 19 des Greifers 18₂ derart ausgestaltet, dass er einen Stapel 3 aus mindestens zwei Gebinden 2 aufnehmen kann.

Die Erfindung wurde in Bezug auf bevorzugte Ausführungsformen beschrieben. Es ist für einen Fachmann selbstverständlich, dass Änderungen und Abwandlungen gemacht werden können, ohne dabei den Schutzbereich der nachstehenden Ansprüche zu verlassen.

## Patentansprüche

1. Vorrichtung (10) zum ökonomischen Formen von Gebindelagen (6), mit mindestens einem Zuleitförderer (12) zum Zuführen der Gebinde (2), mindestens einem weiteren Förderer (14), der dem Zuleitförderer (12) nachgeschaltet ist und dem mindestens ein Greifer (18) zum Positionieren und/oder Drehen der Gebinde (2) zugeordnet ist, mindestens einem Auslaufförderer (16), der dem weiteren Förderer (14) nachgeschaltet ist, auf dem die positionierten und/oder gedrehten Gebinde (2) mit Mitteln zu formschlüssigen Gebindelagen (6) zusammenführbar sind, **dadurch gekennzeichnet, dass** durch den mindestens einen Greifer (18) mindestens ein Gebinde (2) positionierbar und/oder drehbar ist und auf dem positionierten und/oder gedrehten Gebinde (2) durch den mindestens einen Greifer (18) mindestens ein weiteres Gebinde (2) in gleicher Orientierung absetzbar ist oder dass durch den mindestens einen Greifer (18) mindestens zwei Gebinde (2) übgeinander in gleicher Orientierung zu einem Stapel (3) aufstapelbar sind, der für sich durch den mindestens einen Greifer (18) positionier- und/oder drehbar ist.

2. Vorrichtung (10) zum ökonomischen Formen von Gebindelagen (6) nach Anspruch 1, **dadurch gekennzeichnet, dass** ein Anschlag (26) zwischen einem ersten Teil des Auslaufförderers (16₁) und einem zweiten Teil des Auslaufförderers (16₂) angeordnet ist, dass die Gebinde (2) nur in Transportrichtung (4) mindestens zwei formschlüssige Gebindelagen (6) aus Stapeln (3) bilden.

3. Vorrichtung (10) zum ökonomischen Formen von Gebindelagen (6) nach Anspruch 2, **dadurch gekennzeichnet, dass** ein Schieberpaar (22) parallel zur Transportrichtung (4) dem zweiten Teil des Auslaufförderers (16₂) zugeordnet ist, so dass die Gebinde (2) in Transportrichtung (4) und quer zur Transportrichtung (4) mindestens zwei formschlüssige Gebindelagen (6) aus Stapeln (3) bilden.

4. Vorrichtung (10) zum ökonomischen Formen von Gebindelagen (6) nach einem der Ansprüche 1 bis 3, **dadurch gekennzeichnet, dass** der mindestens eine Greifer (18) ein Gebinde (2), welches Bestandteil einer ersten Gebindelage (6₁) ist, positioniert und/oder dreht und dass der Greifer (18) auf das positionierte und/oder gedrehte Gebinde (2) nur ein weiteres Gebinde (2) in gleicher Orientierung absetzt und somit einen Stapel (3) aus zwei Gebinden (2) bildet.

5. Vorrichtung (10) zum ökonomischen Formen von Gebindelagen (6) nach einem der Ansprüche 1 bis 3, **dadurch gekennzeichnet, dass** der mindestens eine Greifer (18) ein zweites Gebinde (2), welches Bestandteil einer zweiten Gebindelage (6₂) ist, auf einem ersten Gebinde (2) in gleicher Orientierung absetzt, welches Bestandteil einer ersten Gebindelage (6₁) ist, so dass der Stapel (3) mit dem mindestens einen Greifer (18) positionier und/oder drehbar ist.

6. Vorrichtung (10) zum ökonomischen Formen von Gebindelagen (6) nach einem den Ansprüchen 3 bis 5, **dadurch gekennzeichnet, dass** mindestens ein Mittel zum Zuführen der mindestens zwei gestapelten und formschlüssigen Gebindelagen (6) aus Stapeln (3) zu einem Palettierer (20), dem zweiten Teil des Auslaufförderers (16₂) zugeordnet ist, der dem zweiten Teil des Auslaufförderers (16₂) nachgeschaltet ist.

7. Vorrichtung (10) zum ökonomischen Formen von Gebindelagen (6) nach Anspruch 6, **dadurch gekennzeichnet, dass** der Palettierer (20) mindestens einen Jalousiekopf (21) umfasst.

8. Vorrichtung (10) zum ökonomischen Formen von Gebindelagen (6) nach Anspruch 6, **dadurch gekennzeichnet, dass** das mindestens eine Mittel zum Zuführen ein Schieber (30) ist.

9. Vorrichtung (10) zum ökonomischen Formen von Gebindelagen (6) nach Anspruch 6 und 7, **dadurch gekennzeichnet, dass** das mindestens eine Mittel zum Zuführen ein Bügel (32) ist, der an dem Jalousiekopf (21) angeordnet ist.

10. Verfahren zum ökonomischen Formen von Gebindelagen (6) **gekennzeichnet durch** die folgenden Schritte:
• dass mit mindestens einem Zuleitförderer (12) die Gebinde (2) mindestens einem weiteren Förderer (14) in Reihe zugeführt werden,
• dass auf dem weiteren Förderer (14) mit mindestens einem Greifer (18) mindestens ein Gebinde (2) positioniert und/oder gedreht wird und dass auf dem positionierten und/oder gedrehten Gebinde (2) **durch** den Greifer (18) mindestens ein weiteres Gebinde (2) in gleicher Orientierung abgesetzt wird oder dass **durch** den Greifer (18) mindestens zwei Gebinde (2) übereinander in gleicher Orientierung zu einem Stapel (3) aufgestapelt werden und dass mit dem mindestens einen Greifer (18) der Stapel (3) anschließend positioniert und/oder gedreht wird, und
• dass dem weiteren Förderer (14) mindestens ein Auslaufförderer (16) zugeordnet ist, auf dem die positionierten und/oder gedrehten Gebinde (2) mit Mitteln zu formschlüssigen Gebindelagen (6) aus Stapeln (3) zusammengeführt werden.

11. Verfahren nach Anspruch 10 **dadurch gekennzeichnet, dass** ein Anschlag (26) zwischen einem ersten Teil des Auslaufförderers (16₁) und einem zweiten Teil des Auslaufförderers (16₂) angeordnet ist, mit dem die Gebinde (2) derart aufgestaut werden, dass nur in Transportrichtung (4) mindestens zwei formschlüssige Gebindelagen (6) aus Stapeln (3) gebildet werden.

12. Verfahren nach Anspruch 11 **dadurch gekennzeichnet, dass** mit einem Schieberpaar (22), das parallel zur Transportrichtung (4) dem zweiten Teil des Auslaufförderers (16₂) zugeordnet ist, die Gebinde (2) in Transportrichtung (4) und quer zur Transportrichtung (4) zu mindestens zwei formschlüssige Gebindelagen (6) aus Stapeln (3) zusammengeführt werden.

13. Verfahren nach einem der Ansprüche 10 bis 12, **dadurch gekennzeichnet, dass** mit dem mindestens einen Greifer (18) ein Gebinde (2), welches Bestandteil einer ersten Gebindelage (6₁) ist, positioniert und/oder gedreht wird und dass durch den Greifer (18) auf das positionierte und/oder gedrehte Gebinde (2) nur ein weiteres Gebinde (2) in gleicher Orientierung abgesetzt wird, um somit einen Stapel (3) aus zwei Gebinden (2) zu bilden.

14. Verfahren nach einem der Ansprüche 10 bis 13, **dadurch gekennzeichnet, dass** mit mindestens einem Greifer (18) ein zweites Gebinde (2), welches Bestandteil einer zweiten Gebindelage (6₂) ist, auf einem ersten Gebinde (2) in gleicher Orientierung abgesetzt wird, wobei das erste Gebinde (2) Bestandteil einer ersten Gebindelage (6₁) ist und dass der Stapel (3) mit dem mindestens einen Greifer (18) positioniert und/oder gedreht wird.

15. Verfahren nach einem der Ansprüche 10 bis 14, **dadurch gekennzeichnet, dass** mit dem mindestens einen Auslaufförderer (16) die Gebindelagen (6) aus Stapeln (3) mindestens einem Palettierer (20) zugeführt werden.

## Claims

1. An apparatus (10) for economically forming packing unit layers (6), having at least one feed conveyor (12) for supplying the packing units (2), at least one further conveyor (14), which is arranged downstream of the feed conveyor (12) and which is associated with at least one gripper (18) for positioning and/or turning the packing units (2), at least one discharge conveyor (16), which is arranged downstream of the further conveyor (14), on which the positioned and/or turned packing unit (2) can be brought together by means to form form-fitting packing unit layers (6), **characterised in that** at least one packing unit (2) can be positioned and/or turned by the at least one gripper (18) and at least one further packing unit (2) can be deposited in the same orientation on the positioned and/or turned packing unit (2) by the at least one gripper (18), or **in that** at least two packing units (2) can be stacked on top of one another in the same orientation by the at least one gripper (18) to form a stack (3), which can for itself be positioned and/or turned by the at least one gripper (18).

2. The apparatus (10) for economically forming packing unit layers (6) according to claim 1, **characterised in that** a limit stop (26) is arranged between a first part of the discharge conveyor (16₁) and a second part of the discharge conveyor (16₂), so that the packing units (2) form at least two form-fitting packing unit layers (6) of stacks (3) only in the conveying direction (4).

3. The apparatus (10) for economically forming packing unit layers (6) according to claim 2, **characterised in that** a pair of pushers (22) is associated, parallel to the conveying direction (4), with the second part of the discharge conveyor (16₂), such that the packing units (2) form at least two form-fitting packing unit layers (6) of stacks (3) in the conveying direction (4) and transversely of the conveying direction (4).

4. The apparatus (10) for economically forming packing unit layers (6) according to any one of claims 1 to 3, **characterised in that** the at least one gripper (18) positions and/or turns a packing unit (2), which is a component part of a first packing unit layer (6₁), and **in that** the gripper (18) deposits only one further packing unit (2) in the same orientation on the positioned and/or turned packing unit (2) and thus forms a stack (3) of two packing units (2).

5. The apparatus (10) for economically forming packing unit layers (6) according to any one of claims 1 to 3, **characterised in that** the at least one gripper (18) deposits a second packing unit (2), which is a component part of a second packing unit layer (6₂), in the same orientation on a first packing unit (2), which is a component part of a first packing unit layer (6₁), such that the stack (3) can be positioned and/or turned with the at least one gripper (18).

6. The apparatus (10) for economically forming packing unit layers (6) according to any one of claims 3 to 5, **characterised in that** at least one means for supplying the at least two stacked and form-fitting packing unit layers (6) formed from stacks (3) to a palletiser (20) is associated with the second part of the discharge conveyor (16₂), said palletiser (20) being arranged downstream of the second part of the discharge conveyor (16₂).

7. The apparatus (10) for economically forming packing unit layers (6) according to claim 6, **characterised in that** the palletiser (20) comprises at least one shutter head (21).

8. The apparatus (10) for economically forming packing unit layers (6) according to claim 6, **characterised in that** the at least one feed means is a pusher (30).

9. The apparatus (10) for economically forming packing unit layers (6) according to claim 6 and claim 7, **characterised in that** the at least one feed means is a bracket (32) arranged on the shutter head (21).

10. A method for economically forming packing unit layers (6), **characterized by** the following steps:
• the packing units (2) are supplied in series by at least one feed conveyor (12) to at least one further conveyor (14),
• at least one packing unit (2) is positioned and/or turned on the further conveyor (14) with at least one gripper (18) and at least one further packing unit (2) is deposited in the same orientation on the positioned and/or turned packing unit (2) by the gripper (18) or at least two packing units (2) are stacked on top of one another in the same orientation by the gripper (18) to form a stack (3), the stack (3) then being positioned and/or turned by the at least one gripper (18), and
• associated with the further conveyor (14) is at least one discharge conveyor (16), on which the positioned and/or turned packing units (2) are brought together by means to form form-fitting packing unit layers (6) from stacks (3).

11. The method according to claim 10, **characterised in that** a limit stop (26) is arranged between a first part of the discharge conveyor (16₁) and a second part of the discharge conveyor (16₂), with which the packing units (2) are backed up in such a way that at least two form-fitting packing unit layers (6) are formed from stacks (3) only in the conveying direction (4).

12. The method according to claim 11, **characterised in that** using a pair of pushers (22), which is associated parallel to the conveying direction (4) with the second part of the discharge conveyor (16₂), the packing units (2) are brought together to form at least two form-fitting packing unit layers (6) from stacks (3) in the conveying direction (4) and transversely of the conveying direction (4).

13. The method according to any one of claims 10 to 12, **characterised in that** by means of the at least one gripper (18) a packing unit (2), which is a component part of a first packing unit layer (6₁), is positioned and/or turned and **in that** only one further packing unit (2) is deposited by the gripper (18) in the same orientation on the positioned and/or turned packing unit (2), in order in this way to form a stack (3) of two packing units (2).

14. The method according to any one of claims 10 to 13, **characterised in that** by means of at least one gripper (18) a second packing unit (2), which is a component part of a second packing unit layer (6₂), is deposited in the same orientation on a first packing unit (2), the first packing unit (2) being a component part of a first packing unit layer (6₁), and **in that** the stack (3) is positioned and/or turned with the at least one gripper (18).

15. The method according to any one of claims 10 to 14, **characterised in that** the packing unit layers (6) consisting of stacks (3) are supplied to at least one palletiser (20) by the at least one discharge conveyor (16).

## Revendications

1. Dispositif (10) pour la formation économique de couches de packs (6), avec au moins un convoyeur d'alimentation (12) pour amener les packs (2), au moins un autre convoyeur (14) qui est installé en aval du convoyeur d'alimentation (12) et est affecté à l'au moins un grappin (18) pour le positionnement et/ou la rotation des packs (2), au moins un convoyeur de décharge (16), qui est installé en aval de l'autre convoyeur (14), sur lequel les packs (2) positionnés et/ou tournés peuvent être regroupés avec des moyens correspondants en couches de packs (6) crabotées, **caractérisé en ce que**, par le au moins un grappin (18), au moins un pack (2) est positionnable et/ou rotatif et, par le au moins un grappin (18), au moins un autre pack (2) peut être déposé avec la même orientation positionné et/ou tourné sur le pack (2), ou **en ce que**, par le au moins un grappin (18), au moins deux packs (2) sont empilables l'un sur l'autre avec la même orientation en une pile (3) qui peut elle-même être positionnée et/ou tournée par le au moins un grappin (18).

2. Dispositif (10) pour la formation économique de couches de packs (6) selon la revendication 1, **caractérisé en ce que** une butée (26) est disposée entre une première partie du convoyeur de décharge (16₁) et une deuxième partie du convoyeur de décharge (16₂), de manière à ce que les packs (2) forment seulement dans le sens de transport (4) au moins deux couches de packs (6) crabotées constituées de piles (3).

3. Dispositif (10) pour la formation économique de couches de packs (6) selon la revendication 2, **caractérisé en ce que** une paire de coulisses (22) est parallèle au sens de transport (4) est affectée à la deuxième partie du convoyeur de décharge (16₂), de manière à ce que les packs (2) forment dans le sens de transport (4) et transversalement par rapport au sens de transport (4) au moins deux couches de packs (6) crabotées constituées de piles (3).

4. Dispositif (10) pour la formation économique de couches de packs (6) selon l'une quelconque des revendications 1 à 3, **caractérisé en ce que** le au moins un grappin (18) positionne et/ou tourne un pack (2) qui est partie intégrante d'une première couche de packs (6₁), et **en ce que** le grappin (18) dépose sur le pack (2) positionné et/ou tourné seulement un autre pack (2) avec la même orientation et, ainsi, forme une pile (3) de deux packs (2).

5. Dispositif (10) pour la formation économique de couches de packs (6) selon l'une quelconque des revendications 1 à 3, **caractérisé en ce que** le au moins un grappin (18) dépose un deuxième pack (2) qui est partie intégrante d'une deuxième couche de packs (6₂) sur un premier pack (2) avec la même orientation, pack (2) qui est partie intégrante d'une première couche de packs (6₁), de manière à ce que la pile (3) puisse être positionnée et/ou tournée avec le au moins un grappin (18).

6. Dispositif (10) pour la formation économique de couches de packs (6) selon l'une quelconque des revendications 3 à 5, **caractérisé en ce que** au moins un moyen d'amenée des au moins deux couches de packs (6) empilées et crabotées constituées de piles (3) à un palettiseur (20) est affecté à la deuxième partie du convoyeur de décharge (16₂), ledit palettiseur (20) étant installé en aval de la deuxième partie du convoyeur de décharge (16₂).

7. Dispositif (10) pour la formation économique de couches de packs (6) selon la revendication 6, **caractérisé en ce que** le palettiseur (20) comprend au moins une tête de jalousie (21).

8. Dispositif (10) pour la formation économique de couches de packs (6) selon la revendication 6, **caractérisé en ce que** le au moins un moyen d'amenée est une coulisse (30).

9. Dispositif (10) pour la formation économique de couches de packs (6) selon les revendications 6 et 7, **caractérisé en ce que** le au moins un moyen d'amenée est une étrier (32) qui est disposé sur la tête de jalousie (21).

10. Procédé pour la formation économique de couches de packs (6), **caractérisé par** les étapes suivantes :
• avec au moins un convoyeur d'alimentation (12), les packs (2) sont amenés en série à au moins un autre convoyeur (14),
• sur l'autre convoyeur (14) comportant au moins un grappin (18), au moins un pack (2) est positionné et/ou tourné, et, sur le pack (2) positionné et/ou tourné, au moins un autre pack (2) est déposé avec la même orientation par le au moins un grappin (18), ou en ce que, par le grappin (18), au moins deux packs (2) sont empilés l'un au-dessus de l'autre avec la même orientation en une pile (3), et la pile (3) peut ensuite être positionnée et/ou tournée par le au moins un grappin (18), et
• en ce qu'est affecté à l'autre convoyeur (14) au moins un convoyeur de décharge (16) sur lequel les packs (2) positionnés et/ou tournés sont regroupés avec des moyens correspondants en couches de packs (6) crabotées constituées de piles (3).

11. Procédé selon la revendication 10, **caractérisé en ce que** une butée (26) est disposée entre une première partie du convoyeur de décharge (16₁) et une deuxième partie du convoyeur de décharge (16₂), butée (26) avec laquelle les packs (2) sont retenus de manière à ce que soient formées seulement dans le sens de transport (4) au moins deux couches de packs (6) crabotées constituées de piles (3).

12. Procédé selon la revendication 11, **caractérisé en ce que**, avec une paire de coulisses (22) qui est parallèle au sens de transport (4) et est affectée à la deuxième partie du convoyeur de décharge (16₂), les packs (2) sont regroupés dans le sens de transport (4) et transversalement par rapport au sens de transport (4) en au moins deux couches de packs (6) crabotées constituées de piles (3).

13. Procédé selon l'une quelconque des revendications 10 à 12, **caractérisé en ce que**, avec le au moins un grappin (18), un pack (2) qui est partie intégrante d'une première couche de packs (6₁) est positionné et/ou tourné, et **en ce que** le grappin (18) dépose sur le pack (2) positionné et/ou tourné seulement un autre pack (2) avec la même orientation afin de former ainsi une pile (3) de deux packs (2).

14. Procédé selon l'une quelconque des revendications 10 à 13, **caractérisé en ce que**, avec le au moins un grappin (18), un deuxième pack (2) qui est partie intégrante d'une deuxième couche de packs (6₂) est déposé sur un premier pack (2) avec la même orientation, étant donné que le premier pack (2) est partie intégrante d'une première couche de packs (6₁), et **en ce que** la pile (3) est positionnée et/ou tournée avec le au moins un grappin (18).

15. Procédé selon l'une quelconque des revendications 10 à 14, **caractérisé en ce que**, avec le au moins un convoyeur de décharge (16), les couches de packs (6) constituées de piles (3) sont amenées à au moins un palettiseur (20).
